# EUROPEAN PATENT SPECIFICATION

(11) **EP 4 542 279 B1**
(45) Date of publication and mention of the grant of the patent: **07.10.2026**
(21) Application number: 23843213.2
(22) Date of filing: 03.07.2023
(51) Int. Cl.: G02B 13/00, G02B 1/04, G02B 17/08, G02B 27/01, G02B 5/30, G02B 3/02, G02B 27/28

(54) **CATADIOPTRIC LENS SYSTEM AND VIDEO SEE-THROUGH DEVICE EQUIPPED THEREWITH**
KATADIOPTRISCHES LINSENSYSTEM UND VIDEODURCHSICHTSVORRICHTUNG DAMIT
SYSTÈME DE LENTILLE CATADIOPTRIQUE ET DISPOSITIF TRANSPARENT VIDÉO ÉQUIPÉ DE CELUI-CI

(30) Priority: 21.07.2022 KR 20220090577; 13.02.2023 KR 20230018985
(43) Date of publication of application: 23.04.2025
(73) Proprietor: Samsung Electronics Co., Ltd., Suwon-si, Gyeonggi-do 16677 (KR)
(72) Inventor: JEONG, Youngmo, Suwon-si, Gyeonggi-do 16677 (KR); CHOI, Jongchul, Suwon-si, Gyeonggi-do 16677 (KR)
(74) Representative: Appleyard Lees IP LLP
(86) International application number: PCT/KR2023/009318
(87) International publication number: WO 2024/019362

(56) References cited:
- CN-A- 110 543 021
- CN-A- 113 866 982
- CN-A- 114 280 783
- CN-A- 114 415 381
- JP-A- 2019 053 152
- JP-A- 2020 095 073
- JP-A- 2020 519 964
- KR-A- 20160 005 557
- US-A1- 2020 064 592
- US-B2- 10 007 035

## Description

### Technical Field

The present disclosure relates to a catadioptric lens system and a video see-through apparatus including the same.

### Background Art

Interest in video see-through (VST) apparatuses has increased. A video see-through method allows a user to enjoy virtual reality (VR) or augmented reality (AR) by wearing a head mounted display (HMD) with a camera attached thereto.

A video see-through apparatus is required to be lightweight and compact, and an optical system used in the video-see-through apparatus is required to have a wide field of view (FOV) and transmit a high-quality image. The optical system includes a lens system including one or more lens elements arranged in an optical-axis direction from the side of the user's pupil to the side of a display surface. The lens system is designed to provide the maximum performance for the maximum FOV at a fixed viewpoint, and for example, a catadioptric lens system also referred to as a pancake lens is used to implement an optical system for a thin video see-through apparatus.

Relevant prior art catadioptric lens systems are disclosed in US 2020/064592, JP 2019 053152, JP 2020 095073, CN 114 280 783 and CN 110 543 021.

### Disclosure of Invention

### Solution to Problem

According to one aspect, a catadioptric lens system used in a video see-through apparatus includes a first lens, a second lens, a third lens, and a fourth lens sequentially arranged in a direction of an optical axis from a side of a user's eye toward a side of an image surface. A second surface of the first lens facing the image surface may be configured to reflect at least a portion of light from the second lens, and a fourth surface of the second lens facing the image surface may be configured to re-reflect at least a portion of light reflected from the first lens. The first lens, the second lens, the third lens, and the fourth lens may respectively have a positive refractive power, a positive refractive power, a negative refractive power, and a positive refractive power. The first lens may be installed to be movable in the direction of the optical axis within a distance range of 0.1 mm to 1.1 mm from the second lens. A change of refractive power within a movement range of the first lens may be within a range of -7D to +1D.

According to another aspect, a video see-through apparatus includes a display panel configured to output light of an image, and a catadioptric lens system, wherein the catadioptric lens system includes a first lens, a second lens, a third lens, and a fourth lens sequentially arranged in a direction of an optical axis from a side of a user's eye toward a side of an image surface. A second surface of the first lens facing the image surface may be configured to reflect at least a portion of light from the second lens, and a fourth surface of the second lens facing the image surface may be configured to re-reflect at least a portion of light reflected from the first lens. The first lens, the second lens, the third lens, and the fourth lens may respectively have a positive refractive power, a positive refractive power, a negative refractive power, and a positive refractive power. The first lens may be installed to be movable in the direction of the optical axis within a distance range of 0.1 mm to 1.1 mm from the second lens. A change of refractive power within a movement range of the first lens may be within a range of -7D to +1D.

### Brief Description of Drawings

FIG. 1 schematically illustrates a video see-through apparatus according to an embodiment of the present disclosure.
FIG. 2 schematically illustrates a case where a catadioptric lens system according to an embodiment of the present disclosure has a first refractive power.
FIG. 3 schematically illustrates a case where a catadioptric lens system according to an embodiment of the present disclosure has a second refractive power.
FIG. 4 is a graph illustrating a change in the distance between a first lens and a second lens while a catadioptric lens system according to an embodiment of the present disclosure changes the refractive power.
FIG. 5 schematically illustrates a display panel according to an embodiment of the present disclosure.
FIG. 6 schematically illustrates a display panel according to an embodiment of the present disclosure.
FIG. 7 schematically illustrates a display panel according to an embodiment of the present disclosure.
FIG. 8 is a modulation transfer function (MTF) chart of a catadioptric lens system for a red wavelength at a refractive power of -7D.
FIG. 9 is an MTF chart of a catadioptric lens system for a red wavelength at a refractive power of -5D.
FIG. 10 is an MTF chart of a catadioptric lens system for a red wavelength at a refractive power of -3D.
FIG. 11 is an MTF chart of a catadioptric lens system for a red wavelength at a refractive power of -1D.
FIG. 12 is an MTF chart of a catadioptric lens system for a red wavelength at a refractive power of +1D.
FIG. 13 is an MTF chart of a catadioptric lens system for a green wavelength at a refractive power of -7D.
FIG. 14 is an MTF chart of a catadioptric lens system for a green wavelength at a refractive power of -5D.
FIG. 15 is an MTF chart of a catadioptric lens system for a green wavelength at a refractive power of -3D.
FIG. 16 is an MTF chart of a catadioptric lens system for a green wavelength at a refractive power of -1D.
FIG. 17 is an MTF chart of a catadioptric lens system for a green wavelength at a refractive power of +1D.
FIG. 18 is an MTF chart of a catadioptric lens system for a blue wavelength at a refractive power of -7D.
FIG. 19 is an MTF chart of a catadioptric lens system for a blue wavelength at a refractive power of -5D.
FIG. 20 is an MTF chart of a catadioptric lens system for a blue wavelength at a refractive power of -3D.
FIG. 21 is an MTF chart of a catadioptric lens system for a blue wavelength at a refractive power of -1D.
FIG. 22 is an MTF chart of a catadioptric lens system for a blue wavelength at a refractive power of +1D.
FIG. 23 is an aberration diagram illustrating the longitudinal spherical aberration, astigmatic field curves, and distortion of a catadioptric lens system at a refractive power of -7D.
FIG. 24 is an aberration diagram illustrating the longitudinal spherical aberration, astigmatic field curves, and distortion of a catadioptric lens system at a refractive power of -5D.
FIG. 25 is an aberration diagram illustrating the longitudinal spherical aberration, astigmatic field curves, and distortion of a catadioptric lens system at a refractive power of -3D.
FIG. 26 is an aberration diagram illustrating the longitudinal spherical aberration, astigmatic field curves, and distortion of a catadioptric lens system at a refractive power of -1D.
FIG. 27 is an aberration diagram illustrating the longitudinal spherical aberration, astigmatic field curves, and distortion of a catadioptric lens system at a refractive power of +1D.

### Mode for the Invention

Hereinafter, embodiments of the present disclosure will be described in detail with reference to the accompanying drawings so that those of ordinary skill in the art may easily implement the embodiments of the present disclosure. However, the present disclosure may be embodied in many different forms and should not be construed as being limited to the embodiments set forth herein. Also, portions irrelevant to the description of the present disclosure will be omitted in the drawings for a clear description of the present disclosure, and like reference numerals will denote like elements throughout the specification.

The terms used herein are those general terms currently widely used in the art in consideration of functions in the present disclosure, but the terms may vary according to the intentions of those of ordinary skill in the art, precedents, or new technology in the art. Also, in some cases, there may be terms that are optionally selected by the applicant, and the meanings thereof will be described in detail in the corresponding portions of the present disclosure. Thus, the terms used herein should be understood not as simple names but based on the meanings of the terms and the overall description of the present disclosure.

As used herein, the singular forms "a", "an", and "the" are intended to include the plural forms as well, unless the context clearly indicates otherwise. Also, when a part "includes" or "comprises" a component, unless there is a particular description contrary thereto, the part may further include other components, not excluding the other components.

Hereinafter, the present disclosure will be described in detail with reference to the accompanying drawings.

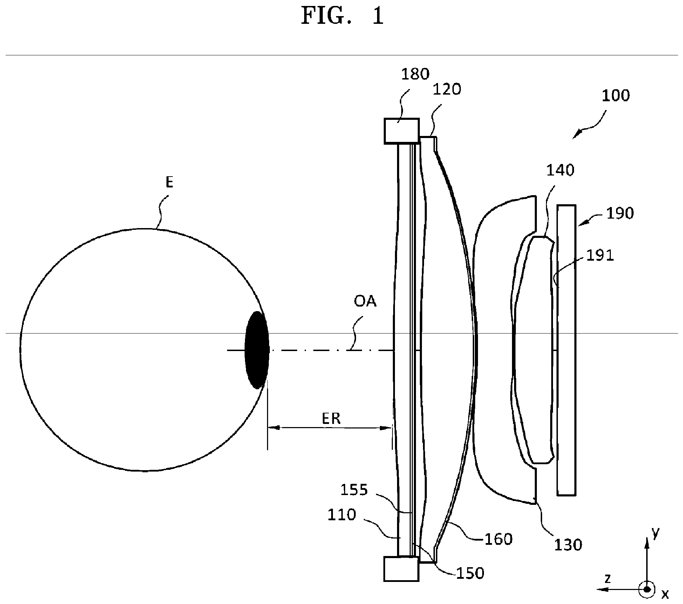

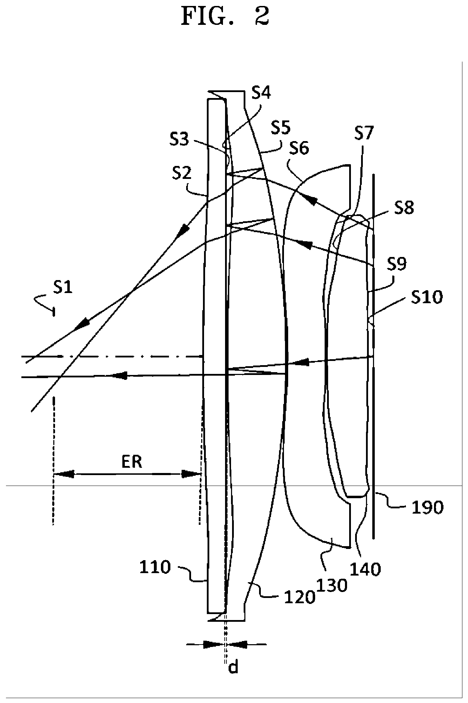

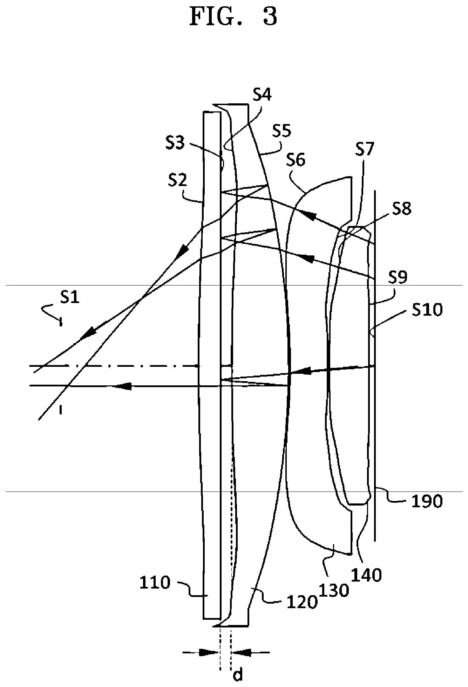

FIG. 1 schematically illustrates a video see-through apparatus according to an embodiment of the present disclosure, FIG. 2 schematically illustrates a case where a catadioptric lens system 100 according to an embodiment of the present disclosure has a first refractive power, and FIG. 3 schematically illustrates a case where a catadioptric lens system 100 according to an embodiment of the present disclosure has a second refractive power.

Referring to FIG. 1, an electronic apparatus may include a catadioptric lens system 100 and a display panel 190. The electronic apparatus may be, for example, a video see-through apparatus configured to allow the user to see an image displayed on the display panel 190 while wearing the same, such as a head mounted display (HMD). The catadioptric lens system 100 may direct an image generated by the display panel 190 to the user's pupil, and when the user wears the electronic apparatus, the catadioptric lens system 100 may be located adjacent to the user's pupil. In that the catadioptric lens system 100 is located adjacent to the user's pupil, the electronic apparatus may be understood as a near-eye display apparatus. Also, in that the user may wear the electronic apparatus on the user's head, the electronic apparatus may be understood as a wearable device. Although not illustrated, the electronic apparatus may be configured to include a separate camera to photograph a real scene and provide the real scene to the user through the display panel 190. The electronic apparatus may be a virtual reality device providing virtual reality or an augmented reality device providing augmented reality. Although the catadioptric lens system 100 and the display panel 190 for one eyeball E are illustrated, the catadioptric lens system 100 and the display panel 190 may be arranged for each of the user's left and right eyes.

The catadioptric lens system 100 may include first to fourth lenses 110, 120, 130, and 140. The first to fourth lenses 110, 120, 130, and 140 may be sequentially arranged from the side of an object (i.e., the user's eye) to the side of an image surface 191. The user's eye E may be intended for the front end of the first lens 110.

The first to fourth lenses 110, 120, 130, and 140 may respectively have a positive (+) refractive power, a positive (+) refractive power, a negative (-) refractive power, and a positive (+) refractive power.

The first to fourth lenses 110, 120, 130, and 140 may include a plastic material. Each of the first to fourth lenses 110, 120, 130, and 140 may be an aspherical lens with at least one aspherical surface.

A first surface S2 of the first lens 110 facing the user's eye E may be an aspherical surface having an apex convex toward the object side and at least one inflection point. A second surface S3 of the first lens 110 facing the display panel 190 may be a flat surface.

A circular polarization plate 150 and a reflection polarizer 155 may be arranged on the second surface S3 of the first lens 110. The reflection polarizer 155 may be attached in a film form to the second surface S3 of the first lens 110, and the circular polarization plate 150 may be attached in a film form to the reflection polarizer 155. For convenience, the circular polarization plate 150 and the reflection polarizer 155 are not illustrated in FIGS. 2 and 3.

The reflection polarizer 155 may be, for example, a wire grid polarizer; however, the present disclosure is not limited thereto. The reflection polarizer 155 may be configured to reflect light of first linear polarization and transmit light of second linear polarization orthogonal to the first linear polarization. For example, when the direction of an optical axis OA is the z-axis direction, the first linear polarization may mean that light is polarized along the x-axis and the second linear polarization may mean that light is polarized along the y-axis; however, the present disclosure is not limited thereto.

The circular polarization plate 150 may be an element that converts linearly polarized light into left-circularly polarized light or right-circularly polarized light. For example, the circular polarization plate 150 may be an optical element that polarizes and converts first linearly polarized light into first circularly polarized light (e.g., left-circularly polarized light) and polarizes and converts second linearly polarized light into second circularly polarized light (e.g., right-circularly polarized light) orthogonal to the first circularly polarized light.

A third surface S4 of the second lens 120 may be an aspherical surface that is convex at the apex toward the object side and has at least one inflection point. A fourth surface S5 of the second lens 120 may be an aspherical surface that is convex toward the image surface side.

A half mirror 160 may be attached in a film form to the fourth surface S5 of the second lens 120. The half mirror 160 may be an optical element that transmits a portion of incident light (e.g., 50 % of the light) and reflects another portion of the incident light (e.g., 50 % of the light). For convenience, the half mirror 160 is not illustrated in FIGS. 2 and 3.

A fifth surface S6 of the third lens 130 may be an aspherical surface that is concave at the apex toward the object side and has at least one inflection point. A sixth surface S7 of the third lens 130 may be an aspherical surface that is convex at the apex toward the image surface side and has at least one inflection point.

A seventh surface S8 of the fourth lens 140 may be an aspherical surface that is convex at the apex toward the object side. An eighth surface S9 of the fourth lens 140 may be an aspherical surface that is convex at the apex toward the image surface side.

As illustrated in FIGS. 2 and 3, the first lens 110 may be installed to be movable in the optical-axis direction. For example, a movable holder 180 supporting the first lens 110 may be controlled by a control signal of a controller (not illustrated) to move the first lens 110 in the direction of the optical axis OA; however, the present disclosure is not limited thereto. As another example, the movable holder 180 may be manually operated to move the first lens 110 in the direction of the optical axis OA. The movement of the first lens 110 in the direction of the optical axis OA may be performed such that a distance d between the first lens 110 and the second lens 120 is within a range of 0.1 mm to 1.1 mm, for example, 0.15 mm to 1.03 mm.

The catadioptric lens system 100 may be configured to have a first refractive power when the distance d between the first lens 110 and the second lens 120 is a first distance, to have a second refractive power when the distance d between the first lens 110 and the second lens 120 is a second distance, and to have a value between the first refractive power and the second refractive power when the distance d between the first lens 110 and the second lens 120 is between the first distance and the second distance.

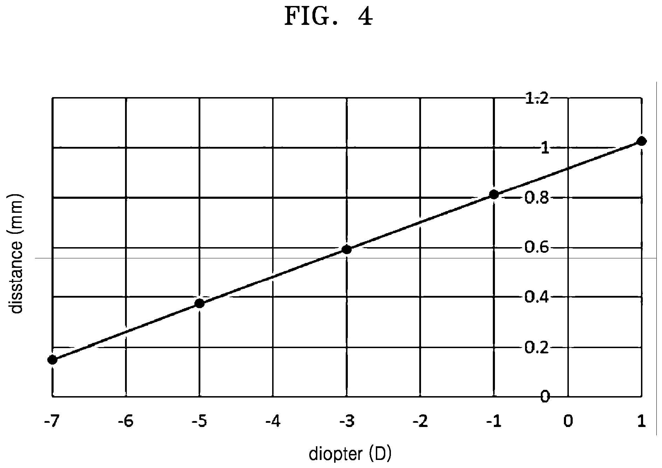

FIG. 4 is a graph illustrating a change in the distance d between the first lens 110 and the second lens 120 while the catadioptric lens system 100 according to an embodiment of the present disclosure changes the refractive power. In FIG. 4, the horizontal axis represents the refractive power (in units of diopter (D)) of the catadioptric lens system 100, and the vertical axis represents the distance d (in units of mm) between the first lens 110 and the second lens 120. Referring to FIG. 4, in an embodiment, when the distance d is 0.15 mm, the first refractive power may be -7D, when the distance d is 1.03 mm, the second refractive power may be +1D, and when the distance d is between 0.15 mm and 1.03 mm, the refractive power of the catadioptric lens system 100 may be within a range of -7D to +1D.

As described above, the position of the first lens 110 in the direction of the optical axis OA may be adjusted to adjust the magnification of the catadioptric lens system 100, and accordingly, the user's vision may be corrected such that even a person with low vision may use the video see-through apparatus without using a separate optical clip.

An eye relief ER may change according to the movement of the first lens 110 in the direction of the optical axis OA. In other words, because the ER changes according to the movement of the first lens 110 in the direction of the optical axis OA, the ER may change according to the refractive power of the catadioptric lens system 100. Here, the ER may refer to the distance between the user's eye and the eyepiece (i.e., the first lens 110).

In an embodiment, the catadioptric lens system 100 of the present embodiment may have the ER within a range of 11 mm to 14 mm even when the position of the first lens 110 is adjusted to correct the user's vision.

In an embodiment, the ER may be within a range of 12 mm to 13 mm.

In an embodiment, the ER may be within a range of 12.12 mm to 13.0 mm.

In an embodiment, when the refractive power of the catadioptric lens system 100 is -7D, the ER may be 13.0 mm, and when the refractive power of the catadioptric lens system 100 is +1D, the ER may be 12.12 mm. In the case of vision correction using an optical clip of the related art, the ER has to be increased because a space for accommodating the optical clip has to be secured; however, because the catadioptric lens system 100 of the present embodiment corrects the vision by adjusting the position of the first lens 110, it may be unnecessary to increase the ER. Also, the catadioptric lens system 100 of the present embodiment may minimize an ER change while providing a vision correction of -7D to +1D.

The catadioptric lens system 100 of the present embodiment may be designed to satisfy the following modulation transfer function (MTF) at a design representative wavelength and a design representative vision in order to maintain uniform performance even when the magnification is adjusted. Here, the design representative wavelength may be at least one of a red wavelength (656.0 nm), a green wavelength (587.0 nm), and a blue wavelength (486.0 nm). The design representative vision may be at least one of refractive powers of - 7D, -5D, -3D, -1D, and +1D.

In an embodiment, the catadioptric lens system 100 may be designed such that an MTF of 0.5 field at the design representative wavelength and the design representative vision is 0.6 or more at fs/4 and the MTF of 0.5 field within the range in which the magnification is adjusted is 70 % or more of 0.6. Here, "fs" may denote the Nyquist frequency that is the limit frequency of theoretical resolution.

In an embodiment, the catadioptric lens system 100 may be designed such that an MTF of 0.7 field at the design representative wavelength and the design representative vision is 0.5 or more at fs/4 and the MTF of 0.7 field within the range in which the magnification is adjusted is 70 % or more of 0.5.

In an embodiment, the catadioptric lens system 100 may be designed such that an MTF of 0.8 field at the design representative wavelength and the design representative vision is 0.4 or more at fs/4 and the MTF of 0.8 field within the range in which the magnification is adjusted is 70 % or more of 0.4.

In an embodiment, the catadioptric lens system 100 may be designed to satisfy OT < 2*ER. Here, "f" may denote the focal length of the catadioptric lens system 100. Here, "OT (Overall Thickness)" may be the total thickness of the catadioptric lens system 100 and may denote the distance from the apex of the first surface S2 of the first lens 110 to the apex of the eighth surface S9 of the fourth lens 140.

In an embodiment, the catadioptric lens system 100 may be designed to provide a field of view (FOV) of 70° to 100° (deg) or more.

In an embodiment, the catadioptric lens system 100 may be designed to provide an FOV of 85° to 95°.

In an embodiment, the catadioptric lens system 100 may be designed to provide an FOV of 89° to 90.3°.

In an embodiment, in order to use the maximum resolution, the catadioptric lens system 100 may be designed to provide an FOV of 90° at a refractive power of -1D, which is expected to be highly usable, to provide an FOV of 90.3° at a refractive power of +1D, and to provide an FOV of 89° at a refractive power of -7D. In this case, even when the refractive power is changed for vision correction, an FOV change and a resolution change may be minimized.

In an embodiment, the catadioptric lens system 100 may be designed to satisfy f < 2*ER. Here, "f" may denote the focal length of the catadioptric lens system 100.

The display panel 190 may be a flat panel that displays an image by light of the first circular polarization (e.g., left-circularly polarized light or right-circularly polarized light).

Next, a light path in the catadioptric lens system 100 will be described.

The light of an image displayed on the display panel 190 may sequentially pass through the fourth lens 140 and the third lens 130 and then reach the fourth surface S5 of the second lens 120. At the half mirror 160 located on the fourth surface S5 of the second lens 120, some of the light may be reflected and some of the light may be transmitted. The light transmitted through the half mirror 160 may reach the second surface S3 of the first lens 110 by passing through the second lens 120 while maintaining the first circular polarization. The light of the first circular polarization may be converted into light of the first linear polarization by the quarter-wavelength plate 150 located on the second surface S3 of the first lens 110 and may be reflected by the reflection polarizer 155. Because the reflection polarizer 155 does not change the polarization direction of the linear polarization, the light reflected by the reflection polarizer 155 may maintain the first linear polarization. The light of the first linear polarization may be converted back into the first circular polarization while passing through the quarter-wavelength plate 150 again. The light converted back into the first circular polarization may be partially re-reflected by the half mirror 160 by passing through the second lens 120. The reflection by the half mirror 160 may change the light of the first circular polarization into light of the second circular polarization orthogonal to the first circular polarization. The light of the second circular polarization re-reflected by the half mirror 160 may be converted into light of the second linear polarization orthogonal to the first linear polarization by the quarter-wavelength plate 150 by passing through the second lens 120 again. The light of the second linear polarization may be directed to the user's eye E by passing through the reflection polarizer 155.

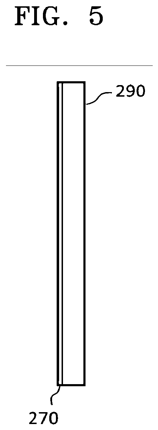

FIG. 5 schematically illustrates a display panel 290 according to an embodiment of the present disclosure. Referring to FIG. 5, in an embodiment, the display panel 290 may be a liquid crystal display (LCD) panel. A second quarter-wavelength plate 270 may be attached in a film form to the front surface of the display panel 290. Because the LCD panel itself displays an image by linearly polarized light, linearly polarized light emitted from the display panel 290 may be converted into circularly polarized light by the second quarter-wavelength plate 270.

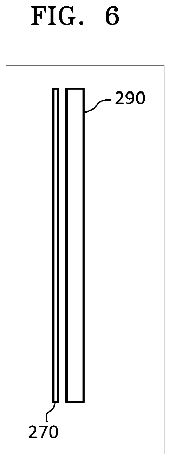

FIG. 6 schematically illustrates a display panel 290 according to an embodiment of the present disclosure. As illustrated in FIG. 6, a second quarter-wavelength plate 270 may be attached to a flat substrate and arranged separately from the display panel 290. The second quarter-wavelength plate 270 may be arranged in contact with or apart from the front surface of the display panel 290.

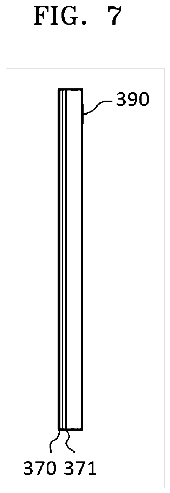

FIG. 7 schematically illustrates a display panel 390 according to an embodiment of the present disclosure. Referring to FIG. 7, in an embodiment, the display panel 390 may be an organic light emitting diode (OLED) panel or a micro LED (µLED) panel. Because the OLED panel or the µLED panel may display an image by unpolarized light, a linear polarizer 371 and a second quarter-wavelength plate 370 may be attached in a film form to the front surface of the display panel 390. The linear polarizer 371 and the second quarter-wavelength plate 370 may be arranged apart from the front surface of the display panel 390 in the form of being attached to a flat substrate. The light emitted from the display panel 390 may be converted into linearly polarized light by the linear polarizer 371 and then converted into circularly polarized light by the second quarter-wavelength plate 370.

Next, the catadioptric lens system 100 will be described with reference to a numerical example.

In the numerical example, "Y" may denote the radius of curvature, and "T" may denote the thickness of a lens or the gap between lenses.

Moreover, the definition of an aspherical surface used in the catadioptric lens system 100 according to an embodiment of the present disclosure may be represented as follows.

When the z-axis direction is set as the optical-axis direction, the aspherical shape may be represented by the following equation by using a Forbes Q-con polynomial in a cylindrical polar coordinate system with respect to the optical-axis direction.

<Aspherical Equation> $z \left(ρ\right) = {a}_{0} + \frac{{δρ}^{2}}{1 + \sqrt{1 - \left(1+k\right) {δ}^{2} {ρ}^{2}}} + {\left(\frac{ρ}{{ρ}_{max}}\right)}^{4} + {\sum }_{i = 0}^{13} {g}_{2 i + 4} {Q}_{i}^{con} {\left(\frac{ρ}{{ρ}_{max}}\right)}^{2}$

Here, "a₀" is an apex position along the optical axis (measured from the display surface), "k" is a conic constant, δ=1/Y, "Y" is the radius of curvature on an apex, and "g_{2 i+4}" is a coefficient of a Forbes Q-con polynomial ${Q}_{i}^{con}$ (Forbes, Shape specification for axially symmetric optical surfaces, Optics Express, Vol.15, Issue 8, pp. 5218-5226 (2007)).

The FOV of the catadioptric lens system 100 may be 90°, and the length of an image surface S10 may be basically 9.25 mm.

In Table 1 and Table 2, symbols S2, S3, ..., S9 may represent the lens surfaces illustrated in FIGS. 2 and 3. "S1" may denote a stop and may correspond to the user's pupil. "S10" may denote the image surface of the display panel 190.

In Table 1 and Table 2, numerical data of the column belonging to symbols S1, S2, S3, S4, S5, S6, ..., S9 may be for light propagating from the image surface side to the object side, and numerical data of the column belonging to symbols S4-2 and S5-2 may be for light reflected and returned from the lens surface. Numerical data of the column belonging to S4-3 may be for light reflected twice and may be seen to be substantially the same as the numerical data of the S4 column. "Y" may denote the radius of curvature, "T" may denote the thickness of a lens or the air gap between lenses, and all of the lengths may be in units of mm.

**[Table 1]**

| Surface | Surface type | Y | T | Material | Refraction mode |
|---|---|---|---|---|---|
| Object | Sphere | Infinity | -142.8571 | | Refract |
| S1 | Sphere | Infinity | 13.0000 | | Refract |
| S2 | Qcon Asphere | 194.7172 | 1.9604 | 'EP900025' | Refract |
| S3 | Sphere | Infinity | 0.1500 | | Refract |
| S4 | Qcon Asphere | 133.0892 | 5.0432 | 'APEL5014' | Refract |
| S5 | Qcon Asphere | -48.9477 | -5.0432 | 'APEL5014' | Reflect |
| S4-2 | Qcon Asphere | 133.0892 | -0.1500 | | Refract |
| S3-2 | Sphere | Infinity | 0.1500 | | Reflect |
| S4-3 | Qcon Asphere | 133.0892 | 5.0432 | 'APEL5014' | Refract |
| S5-2 | Qcon Asphere | -48.9477 | 0.1500 | | Refract |
| S6 | Qcon Asphere | -56.1009 | 3.2731 | 'APEL5014' | Refract |
| S7 | Qcon Asphere | 24.6043 | 0.1500 | | Refract |
| S8 | Qcon Asphere | 25.3506 | 3.5273 | 'EP900025' | Refract |
| S9 | Qcon Asphere | -263.7871 | 0.5389 | | Refract |
| S10 | Sphere | Infinity | -0.0297 | | |

**[Table 2]**

| Parameter | S2 | S4 | S5 | S6 | S7 | S8 | S9 |
|---|---|---|---|---|---|---|---|
| Y radius | 194.7172 | 133.0892 | -48.9477 | -56.1009 | 24.6043 | 25.3506 | -263.7871 |
| Normal radius | 15.7464 | 17.2303 | 18.3653 | 14.9473 | 13.9669 | 12.6920 | 9.9401 |
| 4th-order Qcon coefficient | -0.1034 | -1.0204 | 0.0549 | 7.7669 | 17.9614 | -1.3531 | 0.1618 |
| 6th-order Qcon coefficient | -0.1124 | -0.2239 | -0.1256 | 3.0902 | 8.7554 | 0.1153 | 0.1147 |
| 8th-order Qcon coefficient | 0.0109 | 0.0369 | 0.0214 | 1.5614 | -5.2765 | 0.1577 | 0.0695 |
| 10th-order Qcon coefficient | -0.0117 | 0.0712 | 0.0381 | 0.8672 | -8.6356 | 1.0137 | 0.0213 |
| 12th-order Qcon coefficient | 0.0014 | 0.0074 | 0.0050 | 0.1982 | -6.7673 | 1.4357 | 0.0128 |
| 14th-order Qcon coefficient | 0.0017 | -0.0118 | -0.0052 | 0.1145 | -1.9015 | 1.7700 | -0.0535 |
| 16th-order Qcon coefficient | 0.0021 | -0.0115 | -0.0054 | -0.0291 | 0.1683 | 1.2264 | -0.0292 |
| 18th-order Qcon coefficient | -0.0013 | 0.0104 | 0.0038 | -0.0053 | 0.6796 | 0.7896 | 0.0442 |
| 20th-order Qcon coefficient | 0.0001 | -0.0024 | -0.0011 | -0.0484 | 0.0089 | 0.1952 | -0.0180 |

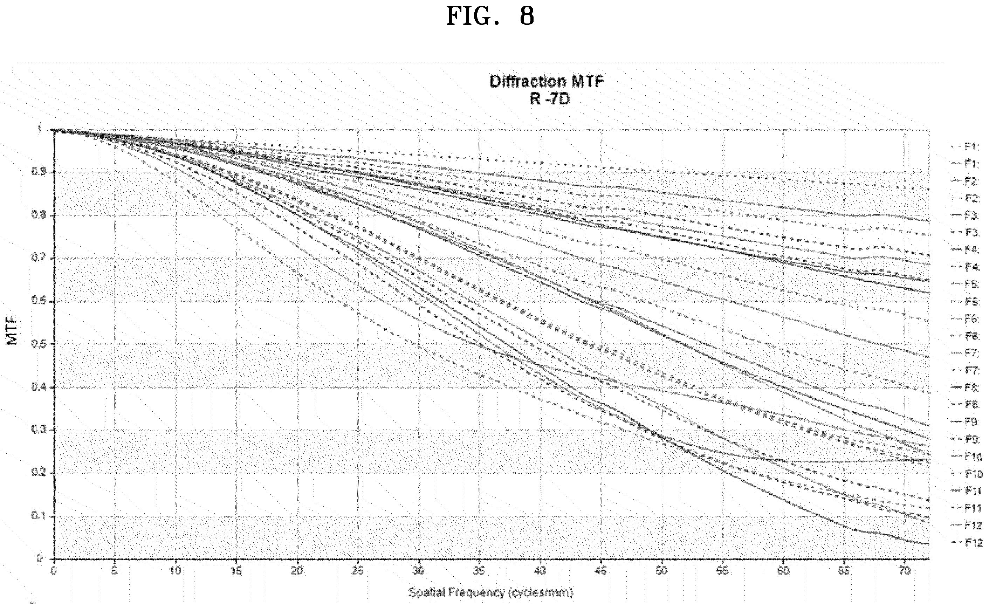

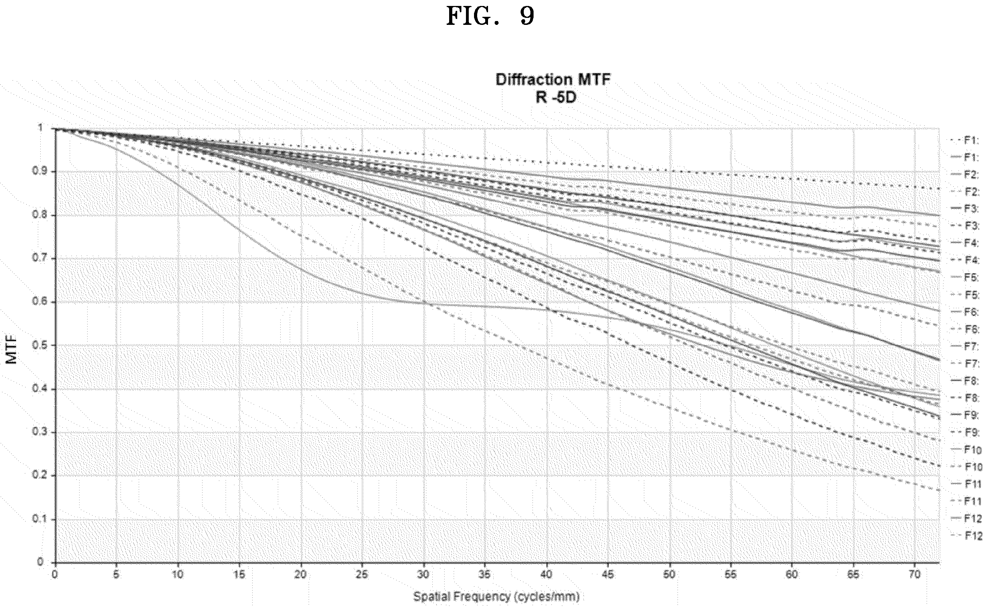

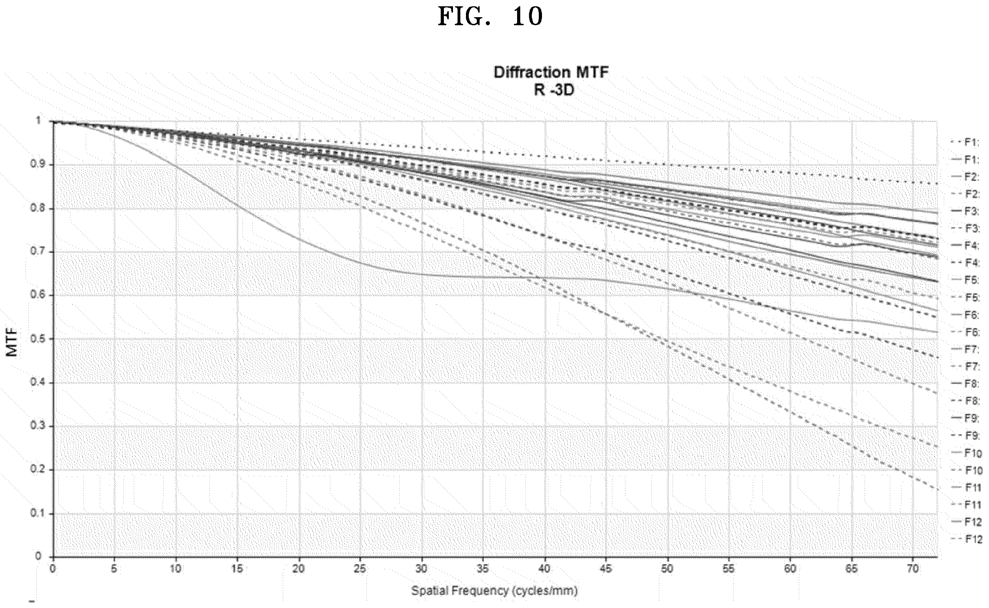

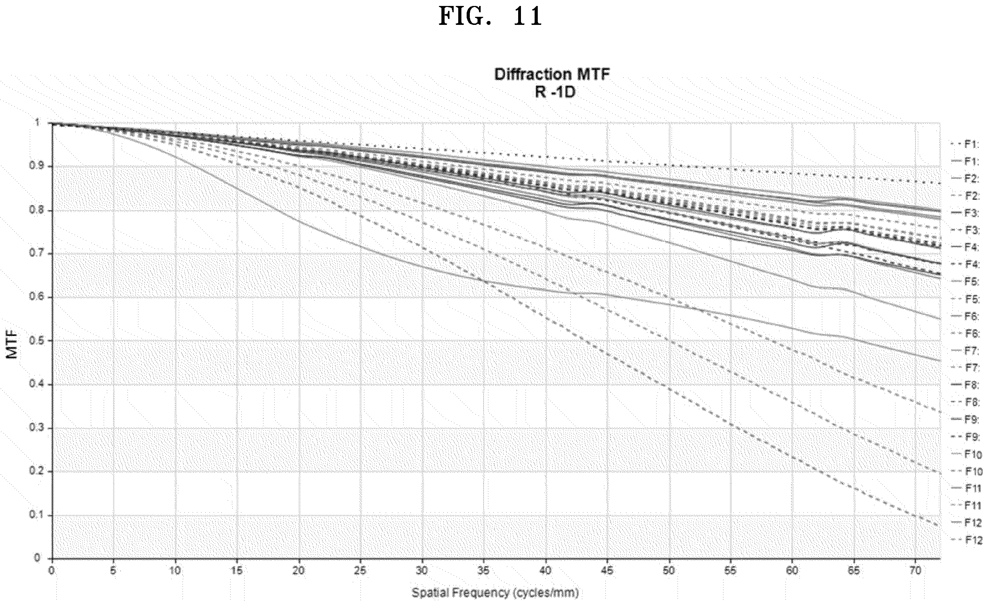

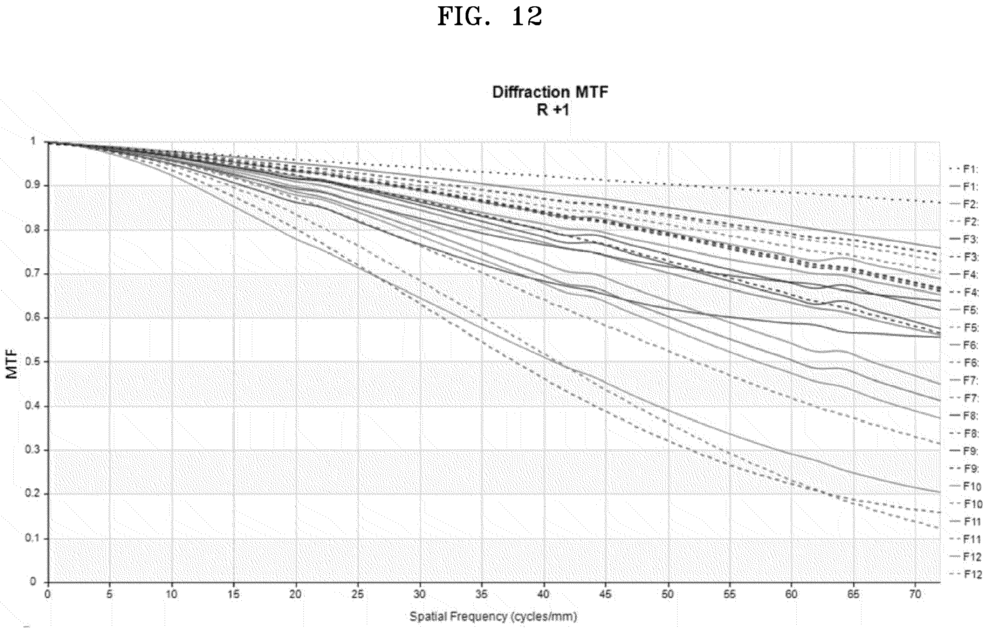

Next, with reference to the MTF chart, the performance of the catadioptric lens system 100 according to the numerical example described above will be described. FIG. 8 is an MTF chart of the catadioptric lens system 100 for a red wavelength (656.0 nm) at -7D, FIG. 9 is an MTF chart of the catadioptric lens system 100 for a red wavelength at -5D, FIG. 10 is an MTF chart of the catadioptric lens system 100 for a red wavelength at -3D, FIG. 11 is an MTF chart of the catadioptric lens system 100 for a red wavelength at -1D, and FIG. 12 is an MTF chart of the catadioptric lens system 100 for a red wavelength at +1D.

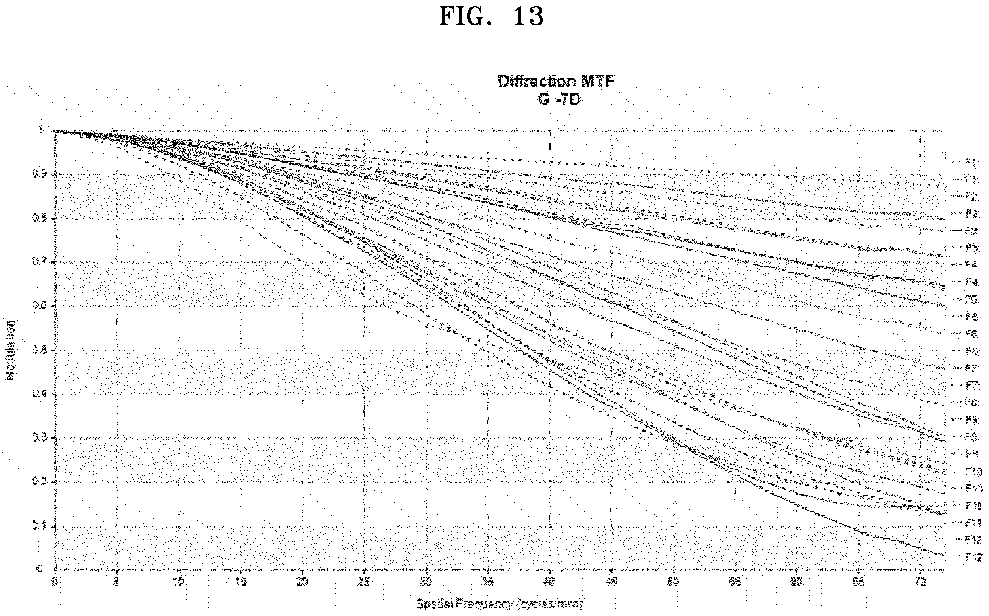

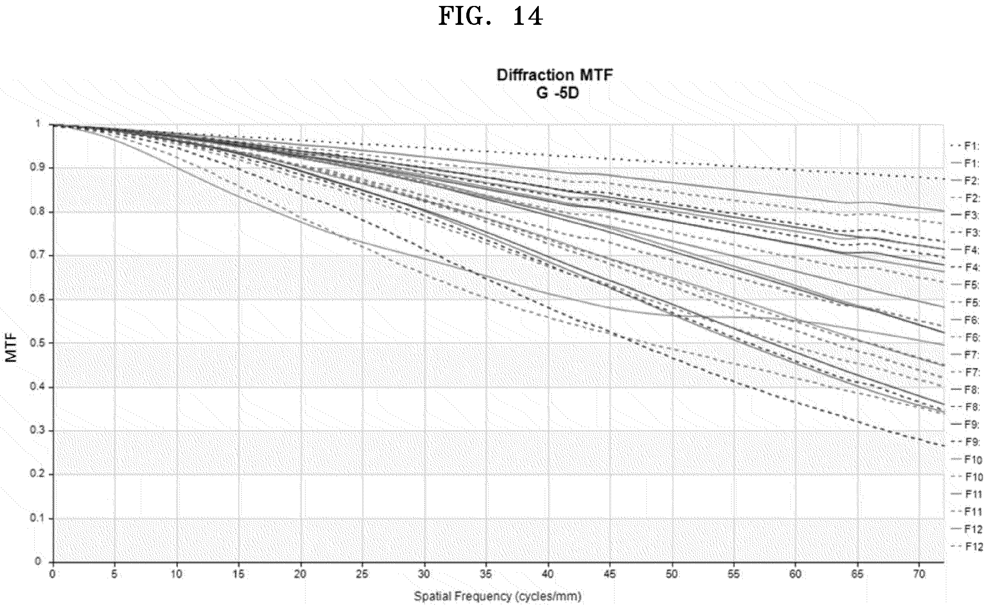

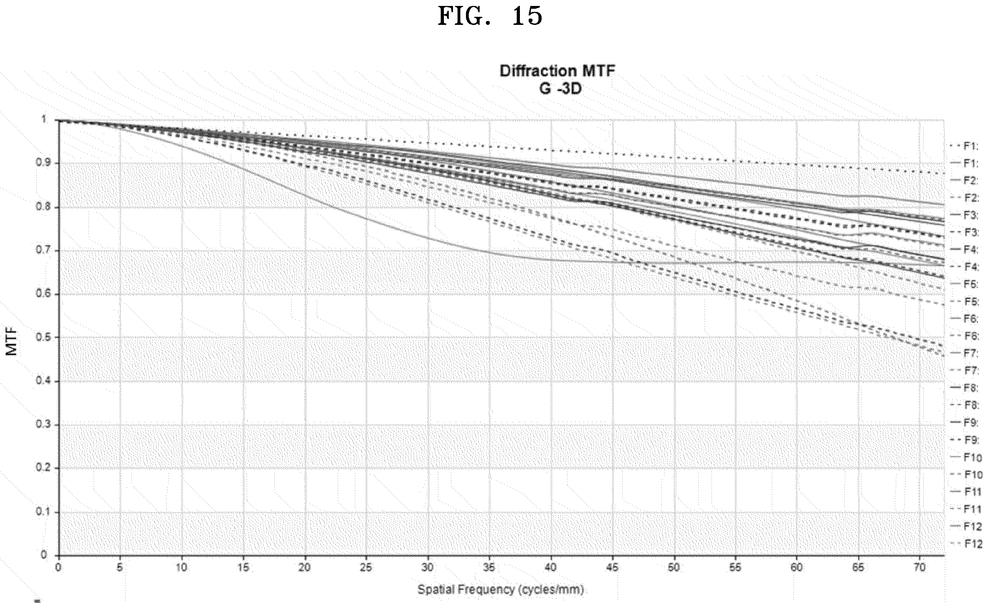

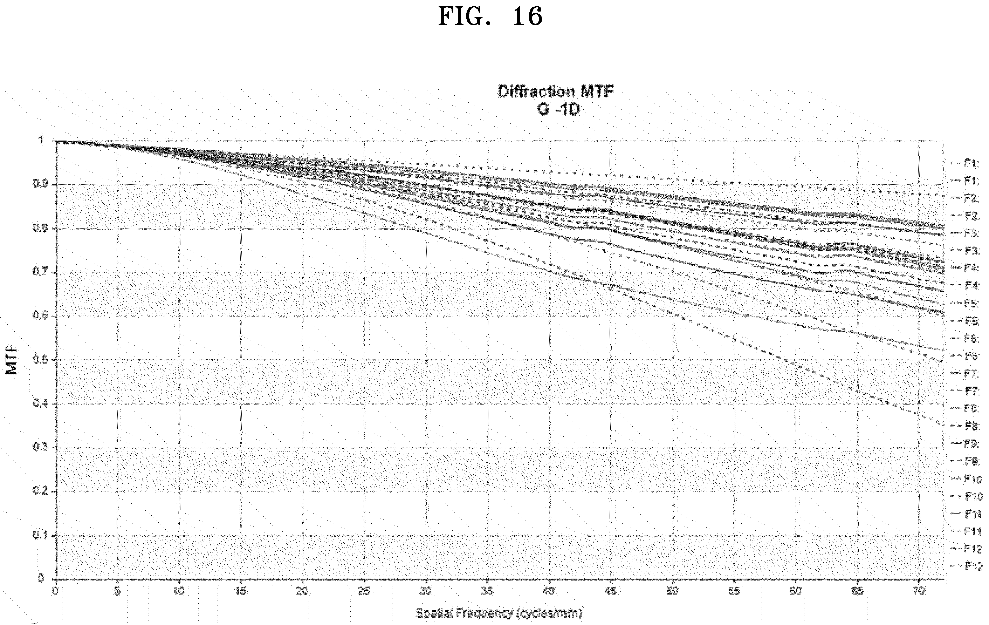

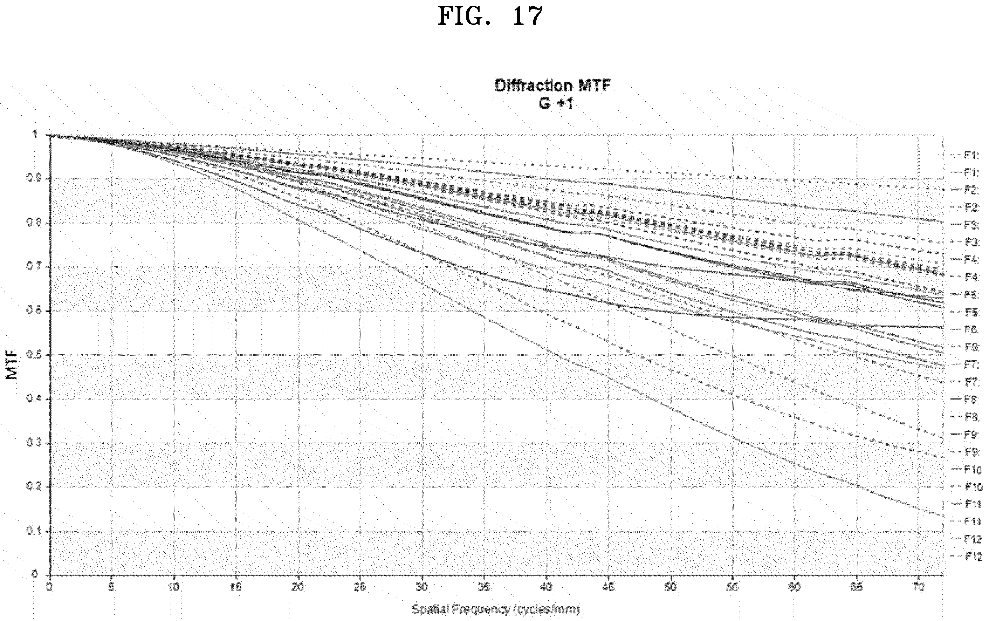

FIG. 13 is an MTF chart of the catadioptric lens system 100 for a green wavelength (587.0 nm) at -7D, FIG. 14 is an MTF chart of the catadioptric lens system 100 for a green wavelength at -5D, FIG. 15 is an MTF chart of the catadioptric lens system 100 for a green wavelength at -3D, FIG. 16 is an MTF chart of the catadioptric lens system 100 for a green wavelength at -1D, and FIG. 17 is an MTF chart of the catadioptric lens system 100 for a green wavelength at +1D.

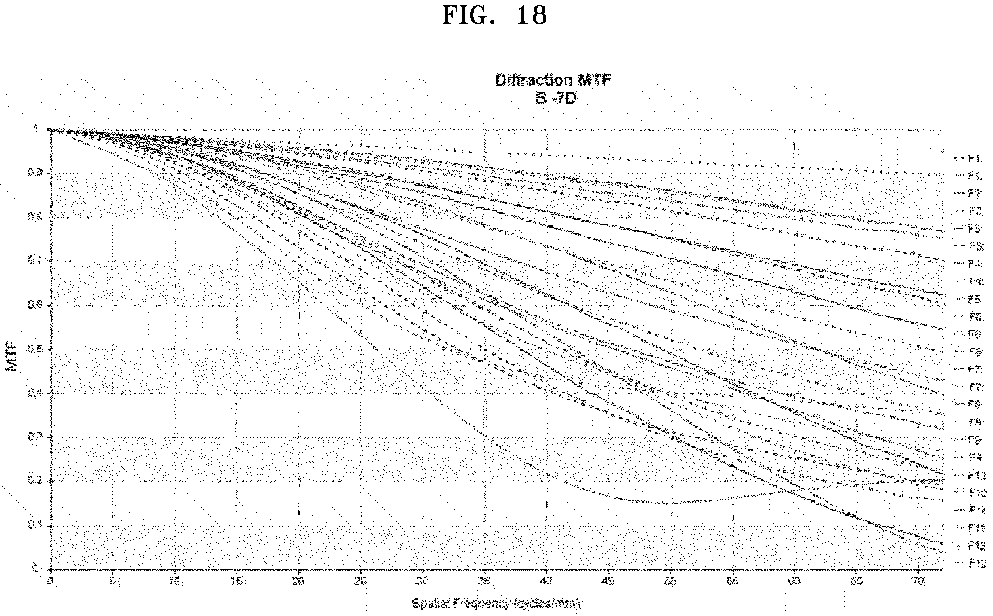

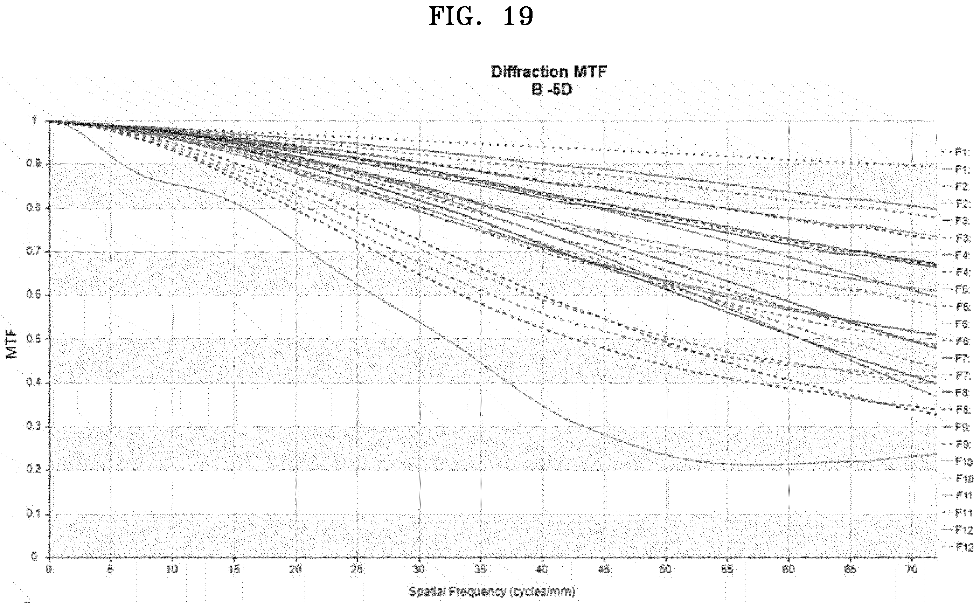

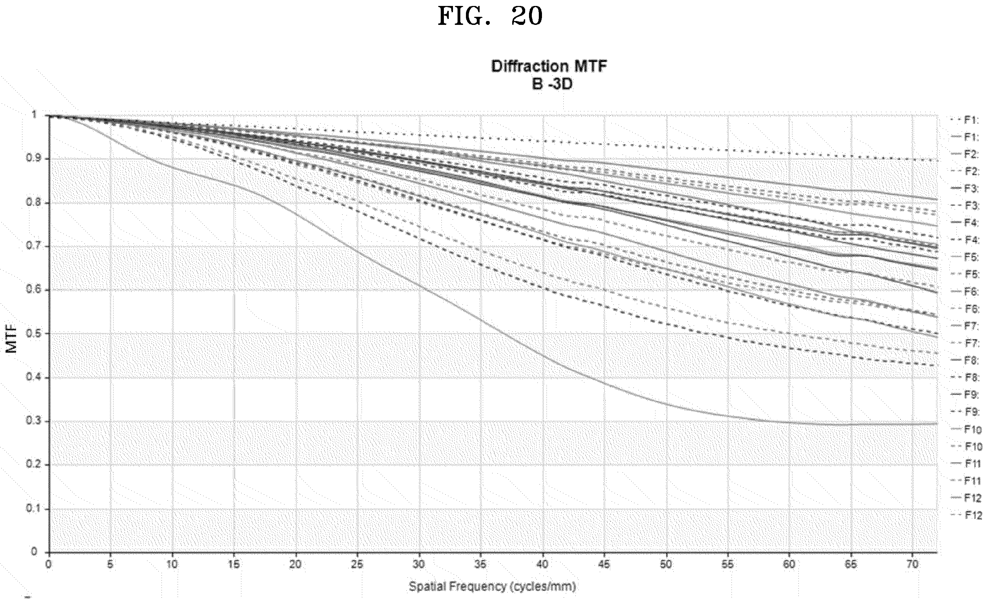

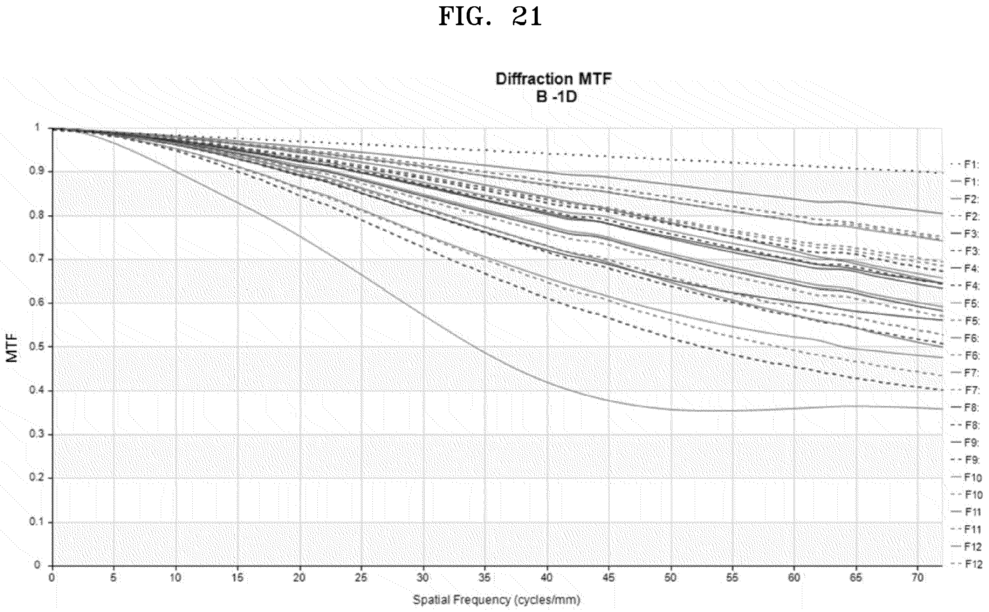

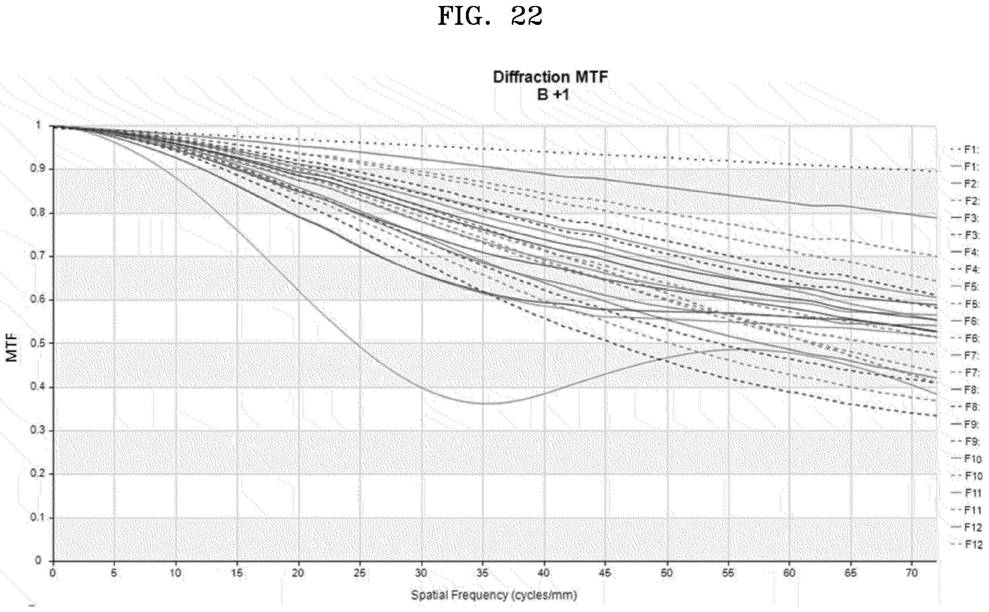

FIG. 18 is an MTF chart of the catadioptric lens system 100 for a blue wavelength (486.0 nm) at -7D, FIG. 19 is an MTF chart of the catadioptric lens system 100 for a blue wavelength at -5D, FIG. 20 is an MTF chart of the catadioptric lens system 100 for a blue wavelength at -3D, FIG. 21 is an MTF chart of the catadioptric lens system 100 for a blue wavelength at -1D, and FIG. 22 is an MTF chart of the catadioptric lens system 100 for a blue wavelength at +1D.

In FIGS. 8 to 22, the horizontal axis represents the spatial frequency, and the vertical axis represents the through-focus MTF at 20 lp/mm. In FIGS. 8 to 22, solid-line curves represent MTFs for lines spreading in a concentric direction from the lens center, and dotted-line curves represent MTFs for lines spreading in a spoke shape from the lens center. In FIGS. 8 to 22, different curves represent MTFs in different fields.

Referring to FIGS. 8 to 22, it may be seen that the catadioptric lens system 100 according to the numerical example described above substantially maintains an MTF value of 0.5 or more of a target resolution of 35 lp/mm at the design representative wavelength (red wavelength (656.0 nm), green wavelength (587.0 nm), and blue wavelength (486.0 nm)) and the design representative vision (-7D, -5D, -3D, -1D, and +1D) while the refractive power changes from -7D to +1D.

Moreover, it may be seen that an MTF of 0.5 field at the design representative wavelength and the design representative vision is 0.6 or more at fs/4 and the MTF of 0.5 field within the range in which the magnification is adjusted is 70 % or more of 0.6.

It may be seen that an MTF of 0.7 field at the design representative wavelength and the design representative vision is 0.5 or more at fs/4 and the MTF of 0.7 field within the range in which the magnification is adjusted is 70 % or more of 0.5.

It may be seen that an MTF of 0.8 field at the design representative wavelength and the design representative vision is 0.4 or more at fs/4 and the MTF of 0.8 field within the range in which the magnification is adjusted is 70 % or more of 0.4.

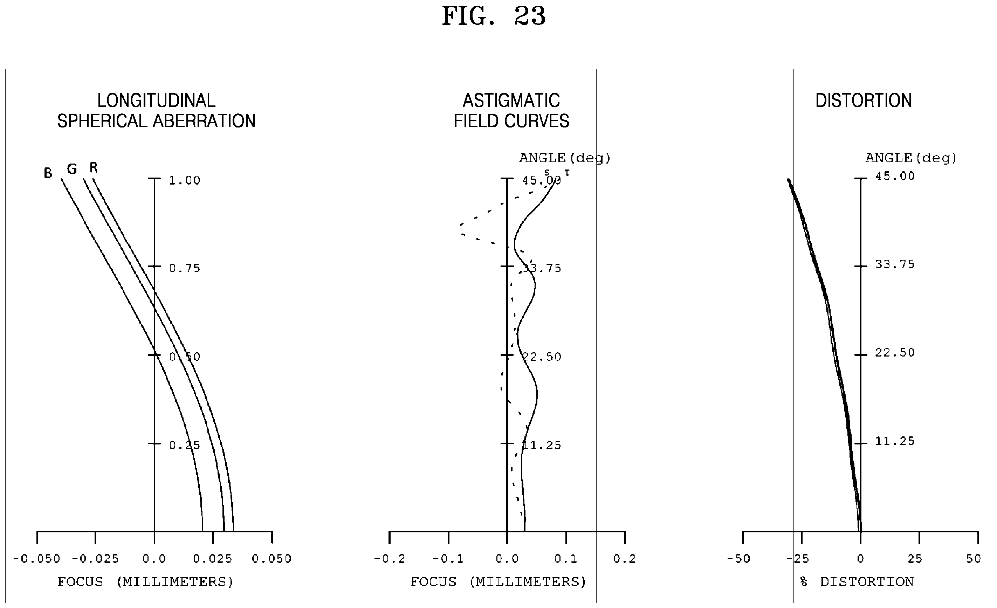

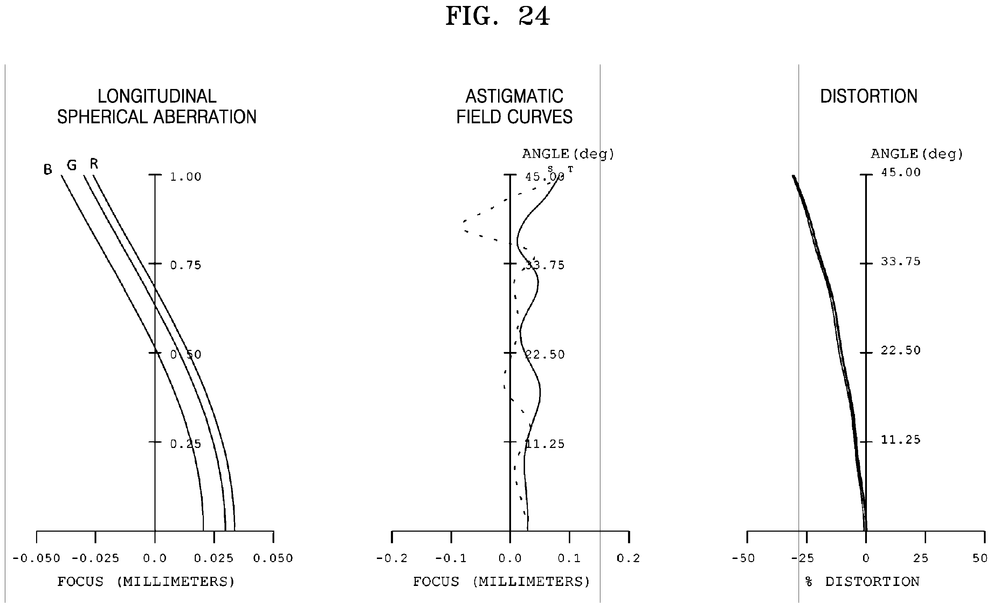

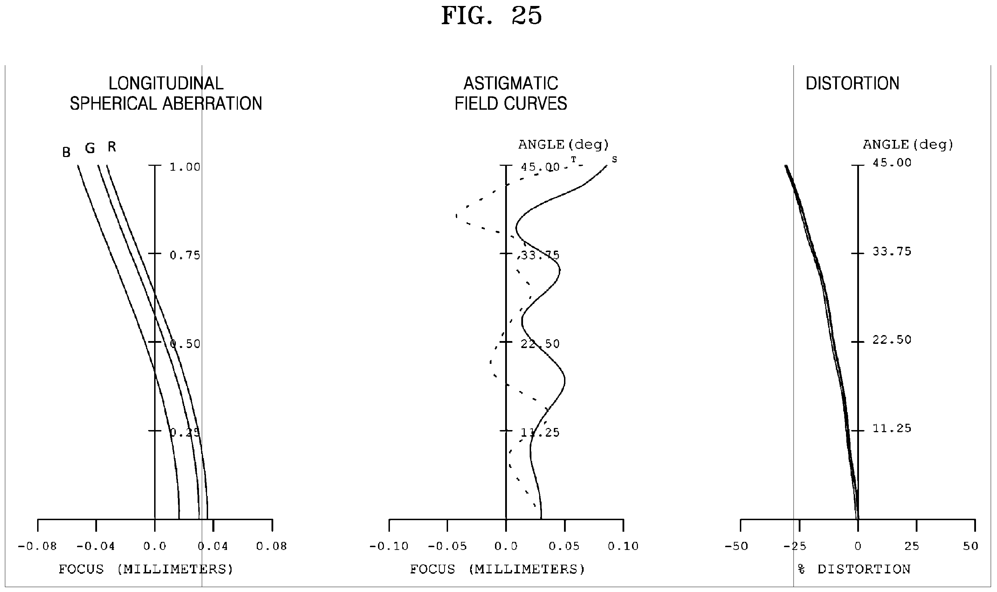

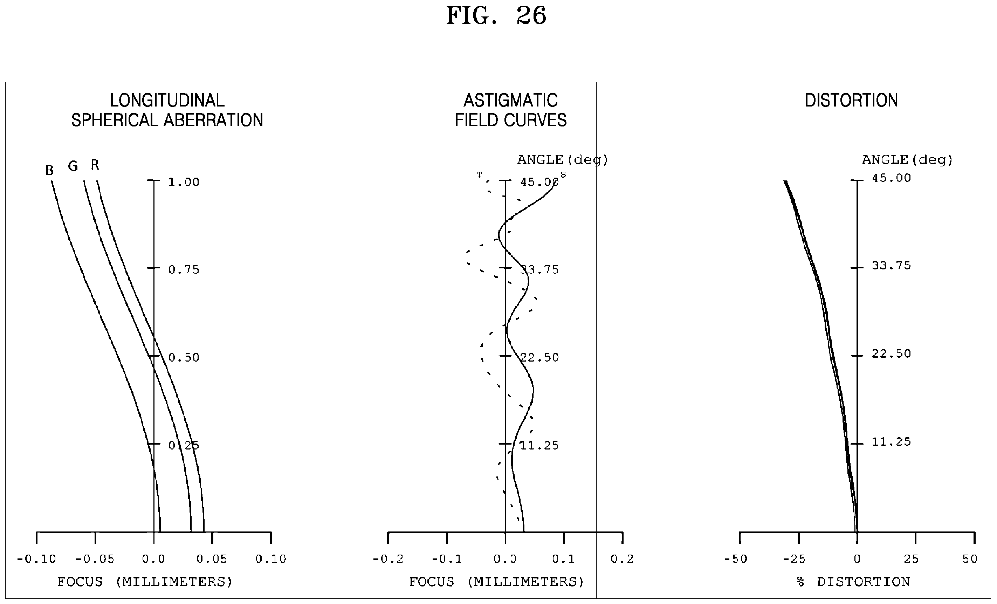

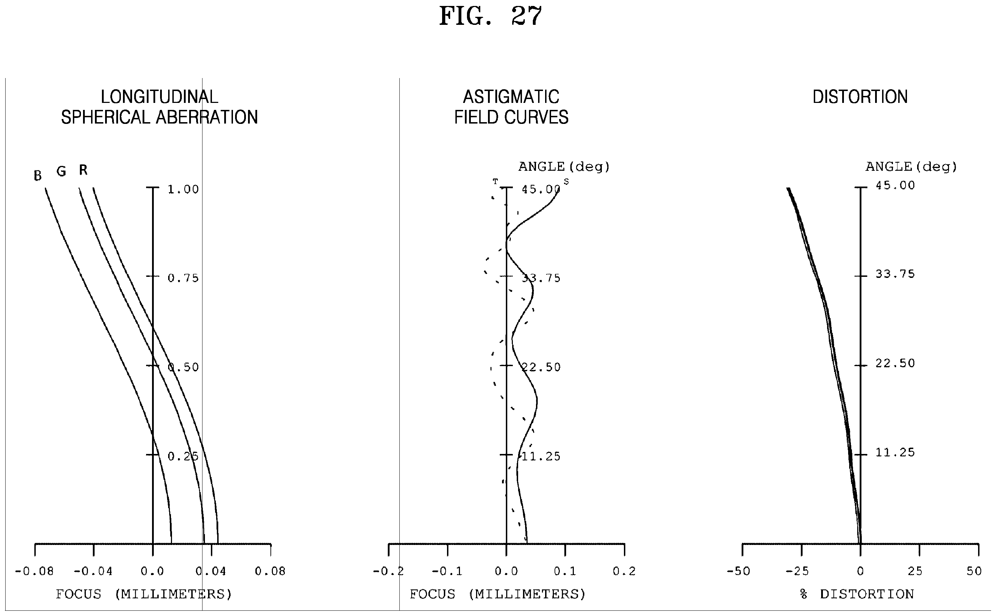

FIG. 23 is an aberration diagram illustrating the longitudinal spherical aberration, astigmatic field curves, and distortion of the catadioptric lens system 100 at a refractive power of -7D, FIG. 24 is an aberration diagram illustrating the longitudinal spherical aberration, astigmatic field curves, and distortion of the catadioptric lens system 100 at a refractive power of -5D, FIG. 25 is an aberration diagram illustrating the longitudinal spherical aberration, astigmatic field curves, and distortion of the catadioptric lens system 100 at a refractive power of -3D, FIG. 26 is an aberration diagram illustrating the longitudinal spherical aberration, astigmatic field curves, and distortion of the catadioptric lens system 100 at a refractive power of -1D, and FIG. 27 is an aberration diagram illustrating the longitudinal spherical aberration, astigmatic field curves, and distortion of the catadioptric lens system 100 at a refractive power of +1D.

The catadioptric lens system and the video see-through apparatus including the same according to the present disclosure have been described above with reference to the embodiments illustrated in the drawings in order to facilitate an understanding thereof; however, this is merely an example, and those of ordinary skill in the art will understood that various modifications and other equivalent embodiments may be made therefrom. Thus, the true technical scope of the present disclosure should be defined by the appended claims.

## Claims

1. A catadioptric lens system (100) used in a video see-through apparatus, the catadioptric lens system comprising:
a first lens (110); a second lens (120); a third lens (130); and a fourth lens (140) sequentially arranged in a direction of an optical axis (OA) from a side of a user's eye (E) toward a side of an image surface (191), wherein a second surface (S3) of the first lens (110) facing the image surface (191) is configured to reflect at least a portion of light from the second lens (120) and a fourth surface (S5) of the second lens (120) facing the image surface (191) is configured to re-reflect at least a portion of light reflected from the first lens (110), the the first lens (110), the second lens (120), the third lens (130), and the fourth lens (140) respectively have a positive refractive power, a positive refractive power, a negative refractive power, and a positive refractive power, the first lens i (110) is installed to be movable in the direction of the optical axis (OA) within a distance range of 0.1 mm to 1.1 mm from the second lens (120), and a change of refractive power within a movement range of the first lens (110) is within a range of -7D to +1D.

2. The catadioptric lens system of claim 1, wherein the first lens is installed to be movable in the direction of the optical axis within a distance range of 0.15 mm to 1.03 mm from the second lens.

3. The catadioptric lens system of claim 1 or 2, wherein a modulation transfer function (MTF) of 0.5 field at a design representative wavelength and a design representative vision is 0.6 or more at fs/4, and
the MTF of 0.5 field within the movement range of the first lens is 70 % or more of 0.6.

4. The catadioptric lens system of claim 1 or 2, wherein an MTF of 0.7 field at a design representative wavelength and a design representative vision is 0.5 or more at fs/4, and
the MTF of 0.7 field within a range in which a magnification is adjusted is 70 % or more of 0.5.

5. The catadioptric lens system of claim 1 or 2, wherein an MTF of 0.8 field at a design representative wavelength and a design representative vision is 0.4 or more at fs/4, and
the MTF of 0.8 field within a range in which a magnification is adjusted is 70 % or more of 0.4.

6. The catadioptric lens system of any one of claims 1 to 5, wherein an eye relief of the catadioptric lens system is within a range of 11 mm to 14 mm.

7. The catadioptric lens system of any one of claims 1 to 6, wherein a field of view of the catadioptric lens system is within a range of 85° to 95°.

8. The catadioptric lens system of any one of claims 1 to 7, further comprising: a reflection polarizer arranged between the first lens and the second lens; a quarter-wavelength plate arranged between the reflection polarizer and the second lens; and
a half mirror arranged between the second lens and the third lens.

9. The catadioptric lens system of claim 8, wherein the reflection polarizer and the quarter-wavelength plate is attached in a film form to an image-surface-side lens surface of the first lens .

10. The catadioptric lens system of claim 8, further comprising a second quarter-wavelength plate arranged between the fourth lens and the image surface.

11. The catadioptric lens system of claim 8, further comprising a linear polarizer and a second quarter-wavelength plate arranged between the fourth lens and the image surface.

12. The catadioptric lens system of any one of claims 1 to 11, wherein the first lens, the second lens, the third lens, and the fourth lens comprise a plastic lens.

13. The catadioptric lens system of any one of claims 1 to 12, wherein the first lens, the second lens, the third lens, and the fourth lens comprise an aspherical lens.

14. The catadioptric lens system of any one of claims 1 to 13, wherein an image-surface-side lens surface of the first lens comprises a flat surface.

15. A video see-through apparatus comprising:
a display panel configured to output light of an image; and
the catadioptric lens system of any one of claims 1 to 14.

## Patentansprüche

1. Katadioptrisches Linsensystem (100), das in einer Videodurchsichtseinrichtung verwendet wird, wobei das katadioptrische Linsensystem Folgendes umfasst:
eine erste Linse (110);
eine zweite Linse (120);
eine dritte Linse (130); und
eine vierte Linse (140),
die sequentiell in einer Richtung einer optischen Achse (OA) von einer Seite eines Auges (E) eines Benutzers zu einer Seite einer Bildoberfläche (191) angeordnet sind,
wobei eine zweite Oberfläche (S3) der ersten Linse (110), die der Bildoberfläche (191) zugewandt ist, dazu konfiguriert ist, zumindest einen Teil von Licht von der zweiten Linse (120) zu reflektieren, und eine vierte Oberfläche (S5) der zweiten Linse (120), die der Bildoberfläche (191) zugewandt ist, dazu konfiguriert ist, zumindest einen Teil von Licht, das von der ersten Linse (110) reflektiert wird, erneut zu reflektieren,
wobei die erste Linse (110), die zweite Linse (120), die dritte Linse (130) und die vierte Linse (140) jeweils eine positive Brechkraft, eine positive Brechkraft, eine negative Brechkraft und eine positive Brechkraft aufweisen,
die erste Linse (110) dazu installiert ist, in der Richtung der optischen Achse (OA) innerhalb eines Abstandsbereichs von 0,1 mm bis 1,1 mm von der zweiten Linse (120) bewegbar zu sein, und
eine Änderung der Brechkraft innerhalb eines Bewegungsbereichs der ersten Linse (110) innerhalb eines Bereichs von -7D bis +1D ist.

2. Katadioptrisches Linsensystem nach Anspruch 1, wobei die erste Linse dazu installiert ist, in der Richtung der optischen Achse innerhalb eines Abstandsbereichs von 0,15 mm bis 1,03 mm von der zweiten Linse bewegbar zu sein.

3. Katadioptrisches Linsensystem nach Anspruch 1 oder 2, wobei eine Modulationsübertragungsfunktion (MTF) von 0,5 Feld bei einer designrepräsentativen Wellenlänge und einer designrepräsentativen Sicht 0,6 oder mehr bei fs/4 ist, und
die MTF von 0,5 Feld innerhalb des Bewegungsbereichs der ersten Linse 70 % oder mehr von 0,6 ist.

4. Katadioptrisches Linsensystem nach Anspruch 1 oder 2, wobei eine MTF von 0,7 Feld bei einer designrepräsentativen Wellenlänge und einer designrepräsentativen Sicht 0,5 oder mehr bei fs/4 ist, und
die MTF von 0,7 Feld innerhalb eines Bereichs, in dem eine Vergrößerung eingestellt ist, 70 % oder mehr von 0,5 ist.

5. Katadioptrisches Linsensystem nach Anspruch 1 oder 2, wobei eine MTF von 0,8 Feld bei einer designrepräsentativen Wellenlänge und einer designrepräsentativen Sicht 0,4 oder mehr bei fs/4 ist, und
die MTF von 0,8 Feld innerhalb eines Bereichs, in dem eine Vergrößerung eingestellt ist, 70 % oder mehr von 0,4 ist.

6. Katadioptrisches Linsensystem nach einem der Ansprüche 1 bis 5, wobei ein Augenrelief des katadioptrischen Linsensystems innerhalb eines Bereichs von 11 mm bis 14 mm ist.

7. Katadioptrisches Linsensystem nach einem der Ansprüche 1 bis 6, wobei ein Sichtfeld des katadioptrischen Linsensystems innerhalb eines Bereichs von 85° bis 95° ist.

8. Katadioptrisches Linsensystem nach einem der Ansprüche 1 bis 7, ferner umfassend:
einen Reflexionspolarisator, der zwischen der ersten Linse und der zweiten Linse angeordnet ist; eine Viertelwellenlängenplatte, die zwischen dem Reflexionspolarisator und der zweiten Linse angeordnet ist; und
einen Halbspiegel, der zwischen der zweiten Linse und der dritten Linse angeordnet ist.

9. Katadioptrisches Linsensystem nach Anspruch 8, wobei der Reflexionspolarisator und die Viertelwellenlängenplatte in einer Filmform an einer bildoberflächenseitigen Linsenoberfläche der ersten Linse angebracht sind.

10. Katadioptrisches Linsensystem nach Anspruch 8, ferner umfassend eine zweite Viertelwellenlängenplatte, die zwischen der vierten Linse und der Bildoberfläche angeordnet ist.

11. Katadioptrisches Linsensystem nach Anspruch 8, ferner umfassend einen linearen Polarisator und eine zweite Viertelwellenlängenplatte, die zwischen der vierten Linse und der Bildoberfläche angeordnet sind.

12. Katadioptrisches Linsensystem nach einem der Ansprüche 1 bis 11, wobei die erste Linse, die zweite Linse, die dritte Linse und die vierte Linse eine Kunststofflinse umfassen.

13. Katadioptrisches Linsensystem nach einem der Ansprüche 1 bis 12, wobei die erste Linse, die zweite Linse, die dritte Linse und die vierte Linse eine asphärische Linse umfassen.

14. Katadioptrisches Linsensystem nach einem der Ansprüche 1 bis 13, wobei eine bildoberflächenseitige Linsenoberfläche der ersten Linse eine flache Oberfläche umfasst.

15. Videodurchsichtseinrichtung, umfassend:
eine Anzeigetafel, die dazu konfiguriert ist, Licht eines Bildes auszugeben; und
das katadioptrische Linsensystem nach einem der Ansprüche 1 bis 14.

## Revendications

1. Système de lentille catadioptrique (100) utilisé dans un appareil à transparence vidéo, le système de lentille catadioptrique comprenant :
une première lentille (110) ; une deuxième lentille (120) ; une troisième lentille (130) ; et une quatrième lentille (140) agencées séquentiellement dans une direction d'un axe optique (OA) depuis un côté de l'œil d'un utilisateur (E) vers un côté d'une surface d'image (191), une deuxième surface (S3) de la première lentille (110) en regard de la surface d'image (191) étant configurée pour réfléchir au moins une partie de la lumière provenant de la deuxième lentille (120) et une quatrième surface (S5) de la deuxième lentille (120) en regard de la surface d'image (191) étant configurée pour réfléchir à nouveau au moins une partie de la lumière réfléchie par la première lentille (110), la première lentille (110), la deuxième lentille (120), la troisième lentille (130) et la quatrième lentille (140) ayant respectivement une puissance de réfraction positive, une puissance de réfraction positive, une puissance de réfraction négative et une puissance de réfraction positive, la première lentille (110) étant installée pour être mobile dans la direction de l'axe optique (OA) à l'intérieur d'une plage de distance de 0,1 mm à 1,1 mm à partir de la deuxième lentille (120), et un changement de puissance de réfraction à l'intérieur d'une plage de mouvement de la première lentille (110) étant à l'intérieur d'une plage de -7D à +1D.

2. Système de lentille catadioptrique selon la revendication 1, ladite première lentille étant installée pour être mobile dans la direction de l'axe optique à l'intérieur d'une plage de distance de 0,15 mm à 1,03 mm à partir de la deuxième lentille.

3. Système de lentille catadioptrique selon la revendication 1 ou 2, une fonction de transfert de modulation (MTF) de 0,5 champ à une longueur d'onde représentative de conception et une vision représentative de conception étant supérieure ou égale à 0,6 à fs/4, et
ladite MTF de 0,5 champ à l'intérieur de la plage de mouvement de la première lentille étant supérieure ou égale à 70 % de 0,6.

4. Système de lentille catadioptrique selon la revendication 1 ou 2, une MTF de 0,7 champ à une longueur d'onde représentative de conception et une vision représentative de conception étant supérieure ou égale à 0,5 à fs/4, et
ladite MTF de 0,7 champ à l'intérieur d'une plage dans laquelle un grossissement est ajusté étant supérieure ou égale à 70 % de 0,5.

5. Système de lentille catadioptrique selon la revendication 1 ou 2, une MTF de 0,8 champ à une longueur d'onde représentative de conception et une vision représentative de conception étant supérieure ou égale à 0,4 à fs/4, et
ladite MTF de 0,8 champ à l'intérieur d'une plage dans laquelle un grossissement est ajusté étant supérieure ou égale à 70 % de 0,4.

6. Système de lentille catadioptrique selon l'une quelconque des revendications 1 à 5, un relief oculaire du système de lentille catadioptrique étant à l'intérieur d'une plage de 11 mm à 14 mm.

7. Système de lentille catadioptrique selon l'une quelconque des revendications 1 à 6, un champ de vision du système de lentille catadioptrique étant à l'intérieur d'une plage de 85° à 95°.

8. Système de lentille catadioptrique selon l'une quelconque des revendications 1 à 7, comprenant en outre : un polariseur de réflexion agencé entre la première lentille et la deuxième lentille ; une plaque quart d'onde agencée entre le polariseur de réflexion et la deuxième lentille ; et
un demi-miroir agencé entre la deuxième lentille et la troisième lentille.

9. Système de lentille catadioptrique selon la revendication 8, ledit polariseur de réflexion et ladite plaque quart d'onde étant fixés sous forme d'un film à une surface de lentille côté surface d'image de la première lentille.

10. Système de lentille catadioptrique selon la revendication 8, comprenant en outre une seconde plaque quart d'onde agencée entre la quatrième lentille et la surface d'image.

11. Système de lentille catadioptrique selon la revendication 8, comprenant en outre un polariseur linéaire et une seconde plaque quart d'onde agencés entre la quatrième lentille et la surface d'image.

12. Système de lentille catadioptrique selon l'une quelconque des revendications 1 à 11, ladite première lentille, ladite deuxième lentille, ladite troisième lentille et ladite quatrième lentille comprennent une lentille en plastique.

13. Système de lentille catadioptrique selon l'une quelconque des revendications 1 à 12, ladite première lentille, ladite deuxième lentille, ladite troisième lentille et ladite quatrième lentille comprennent une lentille asphérique.

14. Système de lentille catadioptrique selon l'une quelconque des revendications 1 à 13, une surface de lentille côté surface d'image de la première lentille comprenant une surface plate.

15. Appareil à transparence vidéo, comprenant :
un panneau d'affichage configuré pour délivrer en sortie de la lumière d'une image ; et le système de lentille catadioptrique selon l'une quelconque des revendications 1 à 14.
